# EUROPÄISCHE PATENTSCHRIFT

(11) **EP 4 341 620 B1**
(45) Veröffentlichungstag und Bekanntmachung des Hinweises auf die Patenterteilung: **04.06.2025**
(21) Anmeldenummer: 22717346.5
(22) Anmeldetag: 12.04.2022
(51) Int. Cl.: F24S 40/80, F24S 30/452, H02S 20/32, F24S 30/00

(54) **SOLARANLAGE**
SOLAR INSTALLATION
INSTALLATION SOLAIRE

(30) Priorität: 17.05.2021 AT 503812021
(43) Veröffentlichungstag der Anmeldung: 27.03.2024
(73) Patentinhaber: Anywhere.Solar GmbH, 5411 Oberalm (AT)
(72) Erfinder: LUBLASSER, Martin, 5071 Wals (AT); PERRER, Stephan, 5081 Anif (AT)
(74) Vertreter: Hübscher & Partner Patentanwälte GmbH
(86) Internationale Anmeldenummer: PCT/AT2022/060113
(87) Internationale Veröffentlichungsnummer: WO 2022/241489

(56) Entgegenhaltungen:
- WO-A1-2009/059093
- WO-A2-2009/150466
- WO-A2-2010/122009
- US-A1- 2013 008 431
- US-A1- 2014 326 294
- US-A1- 2015 076 314
- US-A1- 2018 054 156

## Beschreibung

### Technisches Gebiet

Die Erfindung bezieht sich auf eine Solaranlage mit einem Träger und mit einem auf dem Träger um eine Elevationsachse verschwenkbaren Traggestell für zu einem Solarpaneel zusammengefasste Solarmodule, das in Bezug auf die Elevationsachse einen bodenseitigen unteren und einen daran anschließenden oberen Abschnitt bildet, dessen zur Elevationsachse senkrechte Breitenerstreckung größer als die Breitenerstreckung des unteren Abschnitts ist.

### Stand der Technik

Um einen guten Wirkungsgrad sicherzustellen, sind die Solarpaneele von Solaranlagen dem Sonnenstand nachzuführen. Zu diesem Zweck sind die Solarpaneele um eine Elevationsachse schwenkverstellbar auf einem um eine Azimutachse drehbaren Teller gelagert. Für den Stelltrieb zum Verschwenken des Solarpaneels ergeben sich einfache Konstruktionsbedingungen, wenn die Elevationsachse zumindest angenähert durch den Schwerpunkt des Sonnenpaneels verläuft. Eine solche Schwerpunktlage verhindert jedoch ein selbständiges Verschwenken des Solarpaneels um die Elevationsachse in eine windparallele Sicherheitsstellung mit einer nur geringen Angriffsfläche für den Wind bei hohen Windböen. Zur Verbesserung der Strömungsverhältnisse wurde in diesem Zusammenhang bereits vorgeschlagen (DE 10 2011 115 474 A1), das Solarpaneel mit zusätzlichen, verstellbaren Windleiteinrichtungen auszurüsten, die jedoch die Konstruktion aufwendig und störanfällig machen.

Hinsichtlich der Lagerung eines Solarpaneels um die Elevationsachse und des hierfür vorgesehenen Stelltriebs ergeben sich einfache Konstruktionsbedingungen (WO 2009/059093 A1), wenn das Solarpaneel in Bezug auf die Elevationsachse derart angeordnet wird, dass die zur Elevationsachse senkrechte Breitenerstreckung eines oberen Paneelabschnitts beispielsweise um eine Solarmodulreihe größer als die eines unteren Abschnitts ist, sodass bei einer Windrichtung auf die Paneelvorderseite sowohl das Gewichtsmoment als auch das resultierende Windmoment im Sinne eines Abschwenkens des Solarpaneels wirksam werden. Übersteigt dieses durch den Stelltrieb abgestützte Gesamtdrehmoment einen vorgegebenen Schwellwert, so wird eine Sicherheitskupplung ausgelöst und das Solarpaneel zum Abschwenken in die Sicherheitsstellung freigegeben. Nachteilig ist allerdings, dass bei gegensinnigen Windbelastungen und damit abhebend wirksamen Windkräften die gemäß der Norm auch für Solarpaneele zu beachtenden, für freistehende Pultdächer vorgegebenen, vom Neigungswinkel abhängigen Kraftbeiwerte heranzuziehen sind, die größer als die Kraftbeiwerte für drückende Windbelastungen sind, was entsprechende Bemessungen der Träger und ihrer Verankerung nach sich zieht.

### Darstellung der Erfindung

Der Erfindung liegt somit die Aufgabe zugrunde, eine Solaranlage mit einem in Bezug auf die Elevationsachse außermittig gelagerten Solarpaneel ohne besonderen Konstruktionsaufwand so auszugestalten, dass im Vergleich zum Stand der Technik entweder eine größere, wirksame Solarpaneelfläche bei gleich dimensioniertem Träger oder ein geringer dimensionierter Träger bei gleicher Solarpaneelfläche vorgesehen werden kann.

Ausgehend von einer Solaranlage der eingangs geschilderten Art löst die Erfindung die gestellte Aufgabe dadurch, dass bei einem zumindest weitgehend windundurchlässigen unteren Abschnitt der obere Abschnitt des Solarpaneels Strömungsdurchtrittsöffnungen zumindest zwischen Gruppen von Solarmodulen aufweist.

Aufgrund der im oberen Abschnitt des Solarpaneels vorgesehenen Strömungsdurchtrittsöffnungen wird der bei einer Windbelastung auftretende Staudruck im Bereich des oberen Abschnitts im Vergleich zu einer weitgehend geschlossenen Fläche des unteren Abschnitts erheblich vermindert, was zu einer Verringerung der auf das Solarpaneel einwirkenden resultierenden Windkraft führt. Bei einer Windanströmung in Richtung auf die Vorderseite der Solarmodule bedeutet dies zunächst ein kleineres, im Sinne eines Abschwenkens des Solarpaneels wirksames Windmoment, was jedoch keinen Einfluss auf die Möglichkeit hat, das Solarpaneel bei entkuppeltem Elevationsstelltrieb selbständig in die abgeschwenkte Sicherheitsstellung zu bewegen, weil ja das Gewichtsmoment mithilft und die Sicherheitsstellung selbst dann erreicht wird, wenn das resultierende Windmoment gegensinnig zum Gewichtsmoment wirkt, aber kleiner als das Gewichtsmoment ist.

Bei einer Anströmung des Solarpaneels auf die Rückseite der Solarmodule bildet die den oberen Abschnitt des Solarpaneels beaufschlagende Windkraft ein Gegenmoment zu dem gewichtsbedingten Drehmoment. Da der Staudruck bei über die Breite des Solarpaneels gleichen Windgeschwindigkeiten im oberen Abschnitt aufgrund der Strömungsdurchtrittsöffnungen kleiner als im unteren Abschnitt ist, können bei entsprechender Abstimmung des Verhältnisses der Breitenerstreckungen des oberen und unteren Abschnitts mit den Strömungsquerschnitten der Strömungsdurchtrittsöffnungen auch für diesen Belastungsfall vorteilhafte Bedingungen für die Abtragung der Windbelastungen gewährleistet werden.

Die Solarmodule werden innerhalb eines Solarpaneels üblicherweise in Reihen auf dem Traggerüst des Solarpaneels angeordnet. Diese Anordnung erlaubt Strömungsdurchtrittsöffnungen, die sich zwischen den Reihen der Solarmodule vorzugsweise über die Länge des Solarmoduls in Richtung der Elevationsachse erstrecken.

Um das bei einer Windanströmung auf die Rückseite im Sinne eines Abschwenkens des Solarpaneels in die Sicherheitsstellung wirksame Windmoment auf den unteren Abschnitt des Solarpaneels zu vergrößern, kann am bodenseitigen Rand des unteren Abschnitts des Solarpaneels eine Windleiteinrichtung vorgesehen werden, die jedoch so ausgestaltet sein soll, dass sich die Strömungsverhältnisse bei einer Windanströmung auf die Vorderseite nicht nachteilig auf die Drehmomentbelastung des Solarpaneels auswirken.

### Kurze Beschreibung der Erfindung

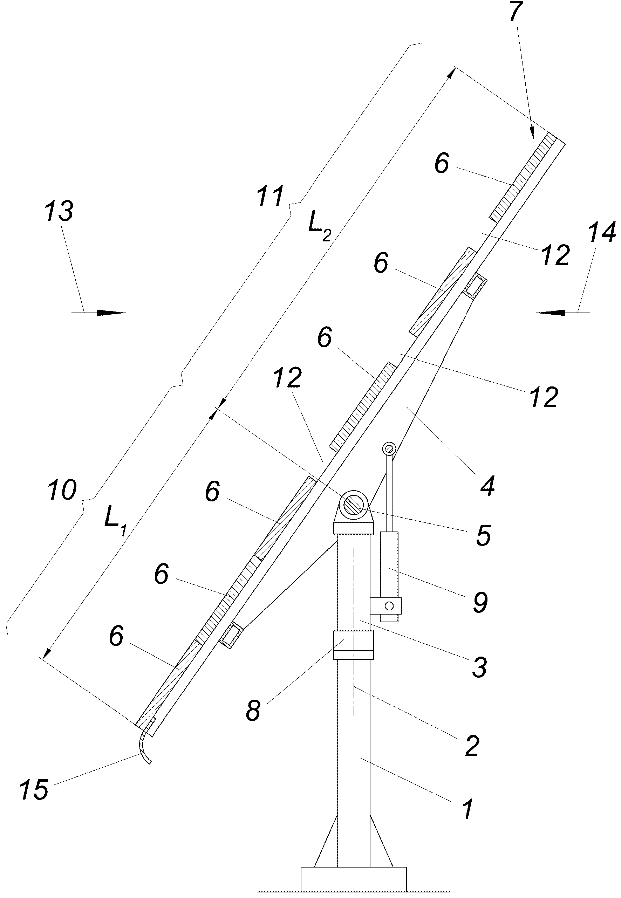

In der Zeichnung ist der Erfindungsgegenstand beispielsweise dargestellt, und zwar wird eine erfindungsgemäße Solaranlage in einem schematischen Schnitt senkrecht zur Elevationsachse gezeigt.

### Wege zur Ausführung der Erfindung

Die dargestellte Solaranlage ist auf einem auf ein Fundament aufgesetzten Träger 1 aufgebaut, der einen um eine Azimutachse 2 drehbaren Aufnahmekopf 3 für ein Traggestell 4 aufweist, das auf dem Aufnahmekopf 3 um eine Elevationsachse 5 verschwenkbar gelagert ist. Auf dem Traggestell 4 sind Solarmodule 6 reihenweise zu einem Solarpaneel 7 zusammengefasst. Zur Nachführung dieses Solarpaneels 7 entsprechend dem Azimut der Sonne ist ein Stelltrieb 8 für den Aufnahmekopf 3 vorgesehen. Die Nachführung des Solarpaneels 7 um die Elevationsachse erfolgt mittels eines als Schwenkzylinder ausgebildeten Stelltriebs 9.

Wie sich der Zeichnung entnehmen lässt, ist das Solarpaneel 7 in Bezug auf die Elevationsachse 5 nicht symmetrisch ausgebildet. Der bodenseitige untere Abschnitt 10 weist eine zur Elevationsachse 5 senkrechte Breitenerstreckung L₁ auf, die kleiner als die Breitenerstreckung L₂ des anschließenden oberen Abschnitts 11 ist. Dies bedingt eine Schwerpunktverlagerung des Solarpaneels 7 in den oberen Abschnitt 11 mit der Wirkung, dass in Bezug auf die Elevationsachse 5 ein Gewichtsmoment wirksam wird, das das Solarpaneel 7 in einem Abschwenksinn beaufschlagt.

Zusätzlich sind im oberen Abschnitt 11 Strömungsdurchtrittsöffnungen 12 zumindest zwischen Gruppen von Solarmodulen 6 vorgesehen, und zwar vorzugsweise zwischen den Reihen der reihenweise angeordneten Solarmodule 6. Die dadurch bedingte, bereichsweise Winddurchlässigkeit bringt einen gegenüber dem im Wesentlichen windundurchlässigen unteren Abschnitt 10 geringeren Staudruck im Bereich des oberen Abschnitts 11 mit sich, wodurch sich die auf das Solarpaneel 7 einwirkenden, windbedingten Kräfte und Momente und damit die für die Dimensionierung des Trägers 1 und seines Fundaments zu berücksichtigenden rechnerischen Lasten erheblich ändern.

Aufgrund der besonderen Ausbildung und Lagerung des Solarpaneels 7 wird das durch den Stelltrieb 9 gegenüber dem Aufnahmekopf 3 abgestützte Gewichtsmoment um die Elevationsachse 5 bei einer Windbelastung in Richtung 13 auf die Vorderseite des Solarpaneels 7 durch das Drehmoment zufolge der Windbelastung des oberen Abschnitts 11 vergrößert. Dies bedeutet, dass trotz eines geringeren Staudrucks im oberen Abschnitt 11 stets ein resultierendes Drehmoment im Sinne eines Abschwenkens des Solarpaneels 7 wirksam ist, sodass eine Überlastungsgefahr aufgrund von Windböen einfach vermieden werden kann, weil durch die mit solchen Windböen einhergehenden Belastungen zu einem selbständigen Entriegeln des Solarpaneels 7 genützt werden können, sei es durch das Vorsehen einer Sollbruchstelle oder einer den Stelltrieb 9 freigebenden Kupplung. In beiden Fällen wird die Abstützung des Solarpaneels 7 durch den Stelltrieb 9 gelöst und als Folge davon das Solarpaneel 7 in eine windparallele Sicherheitsstellung mit einer vergleichsweise geringen Angriffsfläche für den Wind abgeschwenkt. Wegen des im Bereich des oberen Abschnitts 11 geringeren Staudrucks ist auch die vom Träger 1 abzutragende, resultierende Windkraft kleiner.

Für eine auf die Rückseite des Solarpaneels 7 gerichtete Windströmung 14 wird das durch die Windbelastung des oberen Abschnitts 11 bedingte Aufrichtmoment durch das Gewichtsmoment des Solarpaneels 7 verringert, was mit dem im Sinne des Gewichtsmoments wirksamen, durch die Windbelastung des unteren Abschnitts 10 bedingten Moments zu einer entsprechenden Drehmomententlastung des Solarpaneels 7 führt. Zur Unterstützung dieser Wirkung kann der untere Abschnitt 10 des Solarpaneels 7 entlang des bodenseitigen Längsrands mit einer Windleiteinrichtung 15 versehen werden, die bei einer Windanströmung in Richtung des Pfeils 14 für einen zusätzlichen Auftrieb sorgt, bei einer gegensinnigen Anströmrichtung 13 jedoch die Windbelastung des Solarpaneels 7 kaum verändern kann.

Außerdem ist aufgrund der unterschiedlichen Staudrücke im Bereich des unteren und des oberen Abschnitts 10, 11 des Solarpaneels 7 mit einer im Vergleich zu einem windundurchlässigen Solarpaneel 7 geringeren resultierenden Windkraft zu rechnen. Dies ist insbesondere im Hinblick auf den für diese Windrichtung aufgrund der abhebenden Windbelastung größeren Kraftbeiwert von Bedeutung, der nach der Norm für die Bestimmung der aufzunehmenden Höchstlast einzusetzen ist, sodass die Tragkonstruktion bei vergleichbarer Fläche eines Solarpaneels nach dem Stand der Technik schwächer dimensioniert oder die Fläche des Solarpaneels bei vergleichbarer Tragkonstruktion vergrößert werden kann.

## Patentansprüche

1. Solaranlage mit einem Träger (1) und mit einem auf dem Träger (1) um eine Elevationsachse (5) verschwenkbaren Traggestell (4) für zu einem Solarpaneel (7) zusammengefasste Solarmodule (6), das in Bezug auf die Elevationsachse (5) einen bodenseitigen unteren und einen daran anschließenden oberen Abschnitt (11) bildet, dessen zur Elevationsachse (5) senkrechte Breitenerstreckung (L₂) größer als die Breitenerstreckung (L₁) des unteren Abschnitts (10) ist, **dadurch gekennzeichnet, dass** bei einem zumindest weitgehend windundurchlässigen unteren Abschnitt (10) der obere Abschnitt (11) des Solarpaneels (7) Strömungsdurchtrittsöffnungen (12) zumindest zwischen Gruppen von Solarmodulen (6) aufweist.

2. Solaranlage nach Anspruch 1, **dadurch gekennzeichnet, dass** sich die Strömungsdurchtrittsöffnungen (12) zwischen den Reihen der reihenweise angeordneten Solarmodule (6) erstrecken.

3. Solaranlage nach Anspruch 1 oder 2, **dadurch gekennzeichnet, dass** am bodenseitigen Rand des unteren Abschnitts (10) des Solarpaneels (7) eine Windleiteinrichtung (15) vorgesehen ist.

## Claims

1. Solar installation having a support (1) and having a support frame (4) for solar modules (6), which are combined to form a solar panel (7), which support frame (4) can be pivoted on the support (1) about an elevation axis (5) and which support frame (4) forms, with respect to the elevation axis (5), a bottom section (10) on the ground side and an adjoining top section (11), whose width extension (L₂ ) perpendicular to the elevation axis (5) is greater than the width extension (L₁ ) of the bottom section (10), **characterized in that**, while the bottom section (10) is at least largely wind-impermeable , the top section (11) of the solar panel (7) has flow passage openings (12) at least between groups of solar modules (6).

2. Solar installation according to claim 1, **characterized in that** the flow passage openings (12) extend between the rows of the solar modules (6) arranged in rows.

3. Solar installation according to claim 1 or 2, **characterized in that** a wind guiding device (15) is provided on the ground-side edge of the bottom section (10) of the solar panel (7).

## Revendications

1. Installation solaire avec un support (1) et avec un cadre de support (4) qui peut pivoter sur le support (1) autour d'un axe d'élévation (5) pour des modules solaires (6) regroupés en un panneau solaire (7) et qui forme par rapport à l'axe d'élévation (5) une section inférieure côté fond et une section supérieure (11) adjacente à celle-ci, dont l'étendue en largeur (L₂) perpendiculaire à l'axe d'élévation (5) est supérieure à l'étendue en largeur (L₁) de la section inférieure (10), **caractérisée en ce que**, dans le cas où la section inférieure est au moins en grande partie imperméable au vent (10), la section supérieure (11) du panneau solaire (7) présente des ouvertures de passage d'écoulement (12) au moins entre des groupes de modules solaires (6).

2. Installation solaire selon la revendication 1, **caractérisée en ce que** les ouvertures de passage d'écoulement (12) s'étendent entre les séries de modules solaires (6) disposés en séries.

3. Installation solaire selon la revendication 1 ou 2, **caractérisée en ce que**, sur le bord côté fond de la section inférieure (10) du panneau solaire (7), est prévu un dispositif déflecteur de vent (15).
